# EUROPEAN PATENT SPECIFICATION

(11) **EP 3 392 200 B1**
(45) Date of publication and mention of the grant of the patent: **23.09.2020**
(21) Application number: 17743234.1
(22) Date of filing: 25.05.2017
(51) Int. Cl.: C02F 9/00, B01D 29/58, B01D 61/08, C02F 1/44, C02F 1/28, B01D 29/11, B01D 29/17, B01D 29/33, B01D 61/04

(54) **WATER PURIFICATION SYSTEM**
WASSERREINIGUNGSSYSTEM
SYSTÈME DE PURIFICATION D'EAU

(30) Priority: 07.03.2017 CN 201710132569; 07.03.2017 CN 201720219926 U
(43) Date of publication of application: 24.10.2018
(73) Proprietor: Foshan Shunde Midea Water Dispenser MFG. Co., Ltd., Foshan, Guangdong 528311 (CN); Midea Group Co., Ltd., Foshan, Guangdong 528311 (CN)
(72) Inventor: ZHANG, Xingzhi, Foshan Guangdong 528311 (CN); HE, Zhifeng, Foshan Guangdong 528311 (CN)
(74) Representative: Lam, Alvin
(86) International application number: PCT/CN2017/086003
(87) International publication number: WO 2018/161440

(56) References cited:
- CN-A- 103 755 051
- CN-A- 104 478 039
- CN-A- 104 528 976
- CN-A- 104 556 457
- CN-U- 205 346 995
- JP-A- 2007 136 384
- US-A- 4 992 170
- US-A1- 2016 367 920

## Description

### FIELD

The present disclosure relates to a technical field of water treatment, and more particularly to a water purification system.

### BACKGROUND

In the related art, an integrally composite filter cartridge has been more and more applied and researched in a water purification system due to its advantages of a small volume and few joints. However, a rear-mounted activated carbon filter cartridge for improving mouthfeel in the water purification system is generally placed outside of the integrally composite filter cartridge, going against miniaturization of an overall dimension of a machine.

In addition, when an insufficient water pressure appears, a water flux of the whole water purification system tends to be reduced, so that a water yield of the water purification system may be small, thus dissatisfying a requirement for large water flux of an user. Moreover, a booster pump provided in the water purification system tends to be blocked during a long-term use, thereby affecting the use and service life of the water purification system. Thus, an improvement is needed.

CN104528976A relates to an integral combined filter element and a water purifying system with same. The integral combined filter element comprises an outer shell, a pretreatment filter element and a filter membrane, wherein a chamber is defined in the outer shell; the outer shell is provided with a raw water inlet, a purified water outlet and a waste water outlet which are communicated with the chamber; the pretreatment filter element and the filter membrane are both arranged in the chamber and are sequentially arranged among the raw water inlet, the purified water outlet and the waste water outlet; the outer shell is also provided with a pretreatment water outlet and a pretreatment water inlet which are communicated with the chamber; the pretreatment filter element is positioned between the raw water inlet and the pretreatment water outlet; the filter membrane is positioned among the pretreatment water inlet, the purified water outlet and the waste water outlet.

CN205346995U relates to a composite filter element having a composite filter element subassembly, composite filter element includes: follow preliminary treatment filter element group spare, meticulous filtration filter element group spare and active carbon filter element group spare that water flow direction arranged in proper order, preliminary treatment filter element group spare meticulous filtration filter element group spare with active carbon filter element group spare links to each other.

CN103755051A relates to an all-composite nano-filtration and reverse osmosis water purifier comprising a shell, a filter element and a micro booster pump, wherein a clean water outlet nozzle is arranged on the shell; the filter element and the micro booster pump are arranged in the shell; the filter element is a composite filter element; the composite filter element adopts a cylindrical and radial multi-layer composite structure; a filter element seat is arranged in the shell; the composite filter element is arranged on the filter element seat in the shell; a space is reserved in the outer wall of the composite filter element to form a water inlet cavity; a water outlet cavity is separated from the water inlet cavity by a filter layer of the composite filter element; a water inlet connector and a washing water connector are also arranged on the shell.

US4992170A relates to a three element reverse osmosis filter cartridge assembly has a pre-filter section for solid particles, a reverse osmosis membrane filter section which produces product water and waste water from feed water circulated thereto via the pre-filter section, and a post-filter section for filtering the product water. These sections are disposed in coaxial, concentric relationship. The pre-filter section forms a replaceable outside sheath which is slideable onto and off the membrane section. The post-filter section is a tubular body containing carbon or other particles which is removably disposed in a central opening inside the membrane section. The membrane section has a support ring defining one end of the cartridge assembly which is disposed in sealing relationship with a ring which holds filter media layers of the pre-filter section. The pre-filter section has another ring at the end thereof opposite to said first ring and defines the opposite end of said pre-filter section. The cartridge assembly is replaceably disposed in a tubular housing having an end plate at one end thereof and a removable end cap at the opposite end thereof. The end plate has openings or ports for communicating feed water into said pre-filter section and for the out feed of waste water and product water from said membrane section and post-filter section, respectively.

### SUMMARY

Embodiments of the present disclosure seek to solve at least one of the problems existing in the related art to at least some extent. For that reason, a water purification system is provided by the present disclosure. The water purification system has a simple structure, few joints, a small dimension, a high reliability as well as a long service life, and may satisfy a requirement for large water flux of a user.

In accordance with the present invention, there is provided a water purification system as set out in claim 1.

The water purification system according to embodiments of the present disclosure includes a composite filter cartridge assembly including a filter casing and a composite filter cartridge disposed in the filter casing, in which the filter casing has a raw-water inlet, a pretreated-water outlet, a pretreated-water inlet, a purified-water port, a purified-water outlet and a concentrated-water outlet, the composite filter cartridge includes a filtering part and a mouthfeel-improving filter cartridge, the filtering part includes a pretreating filter cartridge and a fine filter cartridge which are disposed in sequence from outside to inside and spaced apart from each other, the mouthfeel-improving filter cartridge is connected to the fine filter cartridge and is located at the downstream of the fine filter cartridge, the pretreated-water outlet is communicated with a water-output end of the pretreating filter cartridge, the pretreated-water inlet is communicated with a water-input end of the fine filter cartridge, the purified-water port is communicated with a water-output end of the fine filter cartridge and communicated with a water-input end of the mouthfeel-improving filter cartridge; a booster pump having a first end connected to the pretreated-water outlet and a second end connected to the pretreated-water inlet, and configured for transporting water flowing out of the pretreated-water outlet to the pretreated-water inlet; a waste-water solenoid valve connected to the concentrated-water outlet; and a water storage device connected to the purified-water port and configured for storing purified water flowing out of the purified-water port.

In the water purification system according to embodiments of the present disclosure, by compositing the mouthfeel-improving filter cartridge and the filtering part into an integral filter cartridge, miniaturization of the overall dimension of the machine may be improved, the amount of joints may be decreased and a risk of water leakage may be reduced. Moreover, by providing the water storage device, the purified water may be stored in the water storage device, so that the requirement for large water flux of the user may still be satisfied when a water pressure is insufficient. Furthermore, by disposing the booster pump at the downstream of the pretreating filter cartridge, the water entering the booster pump has been filtered by the pretreating filter cartridge, thus a risk of blocking the booster pump may be reduced, a service life of the water purification system may be increased, and reliability of the water purification system may be improved.

According to some optional embodiments of the present disclosure, the water purification system further includes a first water-input solenoid valve connected between the booster pump and the pretreated-water inlet. Thus, by disposing the water-input solenoid valve at the downstream of the pretreating filter cartridge, a risk of blocking the solenoid valve may be reduced, thus further increasing the service life of the water purification system and further improving reliability of the water purification system.

According to some optional embodiments of the present disclosure, the raw-water inlet and the pretreated-water inlet are located at an upper end of the filter casing, the pretreated-water outlet, the purified-water port, the purified-water outlet and the concentrated-water outlet are located at a lower end of the filter casing. Thus, the raw-water inlet, the pretreated-water outlet, the pretreated-water inlet, the purified-water port, the purified-water outlet and the concentrated-water outlet are arranged in the filter casing reasonably, thereby facilitating a water passage design in the composite filter cartridge assembly.

According to some optional embodiments of the present disclosure, the water storage device includes: a water storage container configured for storing the purified water; a low-pressure switch connected between the water storage container and the purified-water port; and a water pump connected between the water storage container and the purified-water port and configured for transporting the purified water in the water storage container to the purified-water port. Thus, with the water pump transporting the purified water in the water storage container to the purified-water port, a water yield of the purification system is improved. Moreover, by providing the low-pressure switch, the reliability of the water purification system may be improved.

Furthermore, the water storage device further includes a second water-input solenoid valve, and the second water-input solenoid valve has a first end connected to the purified-water port and a second end connected to the low-pressure switch. Thus, by providing the second water-input solenoid valve, the water passages may be easily controlled to be on or off.

According to some optional embodiments of the present disclosure, the filtering part and the mouthfeel-improving filter cartridge are arranged along an up-and-down direction. Thus, a three-dimensional arrangement of the composite filter cartridge in the up-and-down direction may be implemented, a diameter of the composite filter cartridge may be reduced, and the overall dimension of the machine may be reduced.

According to some optional embodiments of the present disclosure, the fine filter cartridge includes a central water-collecting pipe and a fine filter membrane winding around the central water-collecting pipe, the raw-water inlet is communicated with a water-input end of the pretreating filter cartridge and the central water-collecting pipe is configured as a water-output end of the fine filter cartridge. The composite filter cartridge further includes: a first end cover configured to have an annular shape, disposed at a first end of the filtering part and connected to the pretreating filter cartridge; and a second end cover including an end-cover body configured to have an annular shape and a partition plate configured to have a cylindrical shape and extending along an axial direction from an end of the end-cover body, in which the end-cover body is disposed at a second end of the filtering part and is connected to the pretreating filter cartridge, the partition plate is located between the pretreating filter cartridge and the fine filter cartridge so as to partition the pretreating filter cartridge from the fine filter cartridge. The mouthfeel-improving filter cartridge is disposed in the end-cover body, the mouthfeel-improving filter cartridge is connected to the central water-collecting pipe and has a purified-water passage which is configured to be flowed out of by the purified water, the purified-water passage is communicated with the purified-water outlet, a concentrated-water passage and a circulation passage, which are arranged in sequence from outside to inside and spaced apart from each other, are defined between the mouthfeel-improving filter cartridge and the second end cover, the circulation passage is configured as the water-input end of the mouthfeel-improving filter cartridge and the circulation passage communicates the purified-water port with the central water-collecting pipe, the concentrated-water outlet is communicated with the concentrated-water passage.

Thus, by providing the first end cover and the second end cover, the composite filter cartridge is easy to mount and assemble. Moreover, disposing the mouthfeel-improving filter cartridge in the second end cover facilitates the design of water passages in the composite filter cartridge, allows the structure of the water passages in the composite filter cartridge to be simple, and also ensures the quality of the water flowing out.

According to further embodiments of the present disclosure, the water purification system further includes a connecting shell disposed in the end-cover body and connected to the central water-collecting pipe, in which the concentrated-water passage is defined between the connecting shell and the second end cover, the mouthfeel-improving filter cartridge is disposed in the connecting shell, and the circulation passage is defined between the mouthfeel-improving filter cartridge and an inner wall of the connecting shell. Thus, by providing the connecting shell, the mouthfeel-improving filter cartridge is easy to assemble, and the mouthfeel-improving filter cartridge may be easily separated from the filtering part.

Optionally, a protruding block is provided between the inner wall of the connecting shell and the mouthfeel-improving filter cartridge so as to space the inner wall of the connecting shell apart from the mouthfeel-improving filter cartridge, and a gap between the inner wall of the connecting shell and the mouthfeel-improving filter cartridge is configured as the circulation passage. Thus, by providing the protruding block, the circulation passage is easy to form.

Optionally, the connecting shell is provided with an annular protrusion, and a water-output end of the central water-collecting pipe is fitted in the annular protrusion. Thus, it is easy to connect the mouthfeel-improving filter cartridge with the fine filter cartridge quickly and reliably.

Optionally, the water purification system further includes: a first positioning member and a second positioning member, the first positioning member and the second positioning member are disposed at two axial ends of the mouthfeel-improving filter cartridge respectively and are connected to the mouthfeel-improving filter cartridge. Thus, by providing the first positioning member and the second positioning member, the mouthfeel-improving filter cartridge may be easily positioned in the connecting shell.

Furthermore, the mouthfeel-improving filter cartridge is configured to be tubular and has an inner hole configured as the purified-water passage, the first positioning member includes a first positioning body and a first position limiting protrusion provided to the first positioning body, the first positioning body covers a first end of the mouthfeel-improving filter cartridge adjacent to the central water-collecting pipe, the first position limiting protrusion is fitted in the inner hole of the mouthfeel-improving filter cartridge, the second positioning member includes a second positioning body and a second position limiting protrusion provided to the second positioning body, the second positioning body is provided to a second end of the mouthfeel-improving filter cartridge away from the central water-collecting pipe, the second position limiting protrusion is fitted in the inner hole of the mouthfeel-improving filter cartridge and the second position limiting protrusion has a water hole running through the second positioning member along an axial direction.

Thus, by configuring the mouthfeel-improving filter cartridge to be tubular, the purified-water passage in the mouthfeel-improving filter cartridge may be easy to form. Moreover, with the first position limiting protrusion of the first positioning member and the second position limiting protrusion of the second positioning member being fitted in the inner hole of the mouthfeel-improving filter cartridge respectively, the mouthfeel-improving filter cartridge may be mounted and positioned easily and quickly, and the structure of flow passages in the composite filter cartridge may be simple.

Additional aspects and advantages of embodiments of present disclosure will be given in part in the following descriptions, become apparent in part from the following descriptions, or be learned from the practice of the embodiments of the present disclosure.

### BRIEF DESCRIPTION OF THE DRAWINGS

These and other aspects and advantages of embodiments of the present disclosure will become apparent and more readily appreciated from the following descriptions made with reference to the drawings, in which:
Fig. 1 is a schematic view of a water purification system according to an embodiment of the present disclosure;
Fig. 2 is a schematic view of a composite filter cartridge assembly according to an embodiment of the present disclosure;
Fig. 3 is a schematic view of a composite filter cartridge according to an embodiment of the present disclosure;
Fig. 4 is an enlarged view of portion A in Fig. 3.

### Reference numerals:

water purification system 100,
composite filter cartridge assembly 1,
filter casing 11, raw-water inlet 111, purified-water outlet 112, concentrated-water outlet 113, pretreated-water outlet 114, pretreated-water inlet 115, purified-water port 116,
composite filter cartridge 12, pretreating filter cartridge 121, fine filter cartridge 122, central water-collecting pipe 1221, fine filter membrane 1222, mouthfeel-improving filter cartridge 123,
first end cover 124, first turn-up portion 1241, second turn-up portion 1242, first accommodating cavity 1243,
second end cover 125, end-cover body 1251, third turn-up portion 12511, partition plate 1252, second accommodating cavity 1253,
connecting shell 126, protruding block 1261, annular protrusion 1262, through hole 1263, sealing member 1264,
first positioning member 127, first positioning body 1271, fifth turn-up portion 1272, first position limiting protrusion 1273,
second positioning member 128, second positioning body 1281, sixth turn-up portion 1282, second position limiting protrusion 1283, water hole 1284,
first water-input solenoid valve 3, booster pump 4, check valve 5, high-pressure switch 6, waste-water solenoid valve 7, faucet 8,
water storage container 91, water pump 92, low-pressure switch 93, second water-input solenoid valve 94,
concentrated-water passage a1, circulation passage a2, purified-water passage a3,
water-input pipeline b1, purified-water pipeline b2, concentrated-water pipeline b3, pretreating pipeline b4, water-storage pipeline b5.

### DETAILED DESCRIPTION

Reference will be made in detail to embodiments of the present disclosure. The same or similar elements and the elements having same or similar functions are denoted by like reference numerals throughout the descriptions. The embodiments described herein with reference to drawings are explanatory, illustrative, and used to generally understand the present disclosure. The embodiments shall not be construed to limit the present disclosure.

In the specification, it is to be understood that terms such as "central," "up," "down," "vertical," "horizontal," "top," "bottom," "inner," "outer," "axial," "radial," and "circumferential" should be construed to refer to the orientation as then described or as shown in the drawings under discussion. These relative terms are for convenience of description and do not require that the present disclosure be constructed or operated in a particular orientation. In addition, terms such as "first" and "second" are used herein for purposes of description and are not intended to indicate or imply relative importance or significance or to imply the number of indicated technical features. Thus, the feature defined with "first" and "second" may comprise one or more of this feature. In the description of the present disclosure, "a plurality of' means two or more than two, unless specified otherwise.

In the present disclosure, it should be noted that, unless specified or limited otherwise, the terms "mounted," "connected," "coupled," "fixed" and the like are used broadly, and may be, for example, fixed connections, detachable connections, or integral connections; may also be mechanical or electrical connections; may also be direct connections or indirect connections via intervening structures; may also be inner communications of two elements, which can be understood by those skilled in the art according to specific situations.

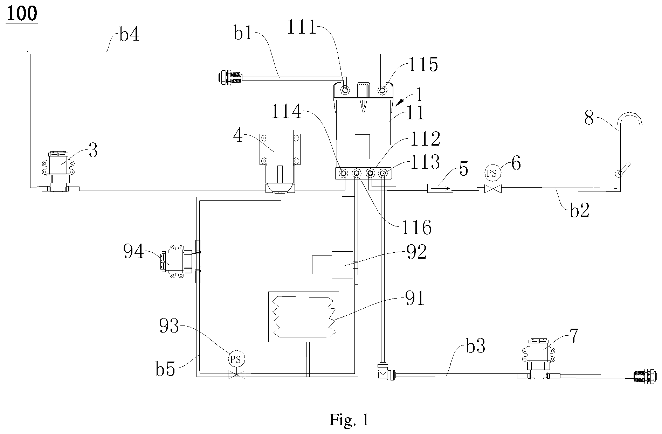

A water purification system 100 according to embodiments of the present disclosure will be described with reference to Figs. 1-4.

As illustrated in Figs. 1-4, the water purification system 100 according to embodiments of the present disclosure includes a composite filter cartridge assembly 1, a booster pump 4, a waste-water solenoid valve 7 and a water storage device 91.

The composite filter cartridge assembly 1 includes a filter casing 11 and a composite filter cartridge 12 disposed in the filter casing 11. The filter casing 11 has a raw-water inlet 111, a pretreated-water outlet 114, a pretreated-water inlet 115, a purified-water port 116, a purified-water outlet 112 and a concentrated-water outlet 113. The composite filter cartridge 12 includes a filtering part and a mouthfeel-improving filter cartridge 123. The filtering part includes a pretreating filter cartridge 121 and a fine filter cartridge 122, which are disposed in sequence from outside to inside and spaced apart from each other. The mouthfeel-improving filter cartridge 123 is connected to the fine filter cartridge 122 and located at the downstream of the fine filter cartridge 122. The pretreated-water outlet 114 is communicated with a water-output end of the pretreating filter cartridge 121, and the pretreated-water inlet 115 is communicated with a water-input end of the fine filter cartridge 122. The purified-water port 116 is communicated with a water-output end of the fine filter cartridge 122 and also is communicated with a water-input end of the mouthfeel-improving filter cartridge 123. Thus, by compositing the mouthfeel-improving filter cartridge 123 and the filtering part into an integral filter cartridge, miniaturization of an overall dimension of a machine is further improved, the amount of joints may be decreased and a risk of water leakage may be reduced.

The pretreating filter cartridge 121 may be configured as a PAC (PP And C, PP cotton and activated carbon composite filter cartridge 12) pretreating filter cartridge 121. For example, the pretreating filter cartridge 121 may include a PP-nonwoven winding layer (a precision of the PP-nonwoven winding layer may be configured to be 5µm) and an activated-carbon-fiber winding layer which are arranged in sequence from outside to inside along a radial direction of the composite filter cartridge 12. The pretreating filter cartridge 121 may effectively remove iron rust and silt, and may also absorb foreign color, foreign smell, residual chlorine as well as partial organic matters in the water, thus ensuring a good quality of the water entering the fine filter cartridge 122 and extending a service life of the fine filter cartridge 122. The mouthfeel-improving filter cartridge 123 may be configured as an activated carbon layer. For example, the mouthfeel-improving filter cartridge 123 may be configured as an activated carbon rod. The mouthfeel-improving filter cartridge 123 may remove volatile organic matters, residual chlorine and may also retain necessary mineral substances such as trace calcium, silicic acid and carbonate, so that a sweet and soft mouthfeel may be provided.

A first end of the booster pump 4 is connected to the pretreated-water outlet 114 and a second end of the booster pump 4 is connected to the pretreated-water inlet 115. The booster pump 4 is used for transporting the water flowing out of the pretreated-water outlet 114 to the pretreated-water inlet 115. Thus, by disposing the booster pump 4 at the downstream of the pretreating filter cartridge 121, the water entering the booster pump 4 has been filtered by the pretreating filter cartridge 121, so that a risk of blocking the booster pump 4 may be reduced, a service life of the water purification system 100 may be improved, and reliability of the water purification system 100 may be improved. Moreover, by separating the pretreating filter cartridge 121 from the fine filter cartridge 122, the water treated by the pretreating filter cartridge 121 may be prevented from entering the fine filter cartridge 122 directly to be filtered without being pressurized by the booster pump 4.

The waste-water solenoid valve 7 is connected to the concentrated-water outlet 113. The waste-water solenoid valve 7 is used for adjusting a proportion of waste water, so as to balance a working pressure of the water purification system 100.

The water storage device is connected to the purified-water port 116. The water storage device is used for storing the purified water flowing out of the purified-water port 116. The waste-water solenoid valve is connected to the concentrated-water outlet 113. Thus, by providing the water storage device, the purified water may be stored in the water storage device, thus satisfying a requirement for large water flux of a user when a water pressure is insufficient.

A working process of the water purification system 100 may be described briefly with reference to Figs. 1-4.

Referring to Figs. 1-4, raw water enters the filter casing 11 through the raw-water inlet 111 in the filter casing 11 and is primarily filtered by the pretreating filter cartridge 121 of the filtering part. The water after being primarily filtered by the pretreating filter cartridge 121 flows out of the composite filter cartridge assembly 1 through the pretreated-water outlet 114 in the filter casing 11 and is pressurized by the booster pump 4. Thus, the raw water may be primarily filtered before entering the booster pump 4, so as to reduce the risk of blocking the booster pump 4. The pressurized water flows into the composite filter cartridge assembly 1 through the pretreated-water inlet 115 in the filter casing 11 and is finely filtered by the fine filter cartridge 122. The purified water obtained by filtration of the fine filter cartridge 122 flows out of the purified-water port 116 in the filter casing 11 and further flows into the water storage device. The water storage device stores the purified water for drinking. Also, the generated concentrated water is discharged out of the water purification system 100 through the concentrated-water outlet 113 in the filter casing 11.

When drinking water is needed, the purified water stored in the water storage device may return into the filter casing 11 through the purified-water port 116 and enters the water-input end of the mouthfeel-improving filter cartridge 123, and also, the raw water entering through the raw-water inlet 111 flows into the water-input end of the mouthfeel-improving filter cartridge 123 successively after being filtered by the filtering part. The purified water entering the water-input end of the mouthfeel-improving filter cartridge 123 flows out of the purified-water outlet 112 in the filter casing 11 to be drunk after the purified water is filtered by the mouthfeel-improving filter cartridge 123 and the mouthfeel of the purified water is improved. Thus, the water flux and a water yield per unit time may be improved, so that the requirement for large water flux of the user may still be satisfied when the water pressure is insufficient. Moreover, by disposing the water storage device at the upstream of the mouthfeel-improving filter cartridge 123, a foreign smell generated by the purified water due to long time storage thereof in the water storage device may be removed, thus ensuring the quality of the water eventually flowing out of the water purification system 100.

In the water purification system 100 according to embodiments of the present disclosure, by compositing the mouthfeel-improving filter cartridge 123 and the filtering part into the integral filter cartridge, the miniaturization of the overall dimension of the machine may be improved, the amount of joints may be decreased and the risk of water leakage may be reduced. Moreover, by providing the water storage device, the purified water may be stored in the water storage device, and thus the requirement for large water flux of the user may still be satisfied when the water pressure is insufficient. Also, by disposing the booster pump 4 at the downstream of the pretreating filter cartridge 121, the water entering the booster pump 4 has been filtered by the pretreating filter cartridge 121, thus the risk of blocking the booster pump 4 may be reduced, the service life of the water purification system 100 may be enhanced, and the reliability of the water purification system 100 may be improved.

According to some optional embodiments of the present disclosure, referring to Fig. 1, the water purification system 100 further includes a first water-input solenoid valve 3, and the first water-input solenoid valve 3 is connected between the booster pump 4 and the pretreated-water inlet 115. Thus, by disposing the water-input solenoid valve at the downstream of the pretreating filter cartridge 121, a risk of blocking the solenoid valve may be reduced, thus further enhancing the service life of the water purification system 100 and further improving the reliability of the water purification system 100.

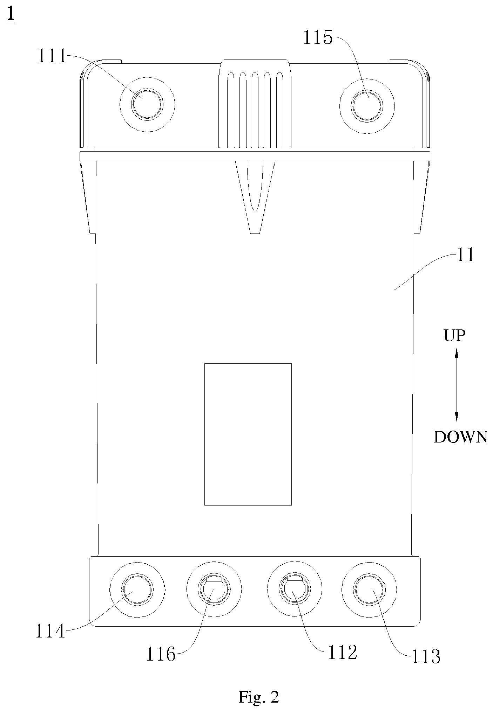

According to some optional embodiments of the present disclosure, referring to Fig. 2, the raw-water inlet 111 and the pretreated-water inlet 115 are located at an upper end of the filter casing 11. The pretreated-water outlet 114, the purified-water port 116, the purified-water outlet 112 and the concentrated-water outlet 113 are located at a lower end of the filter casing 11. Thus, the raw-water inlet 111, the pretreated-water outlet 114, the pretreated-water inlet 115, the purified-water port 116, the purified-water outlet 112 and the concentrated-water outlet 113 are arranged in the filter casing 11 reasonably, thereby facilitating a design of water passages in the composite filter cartridge assembly 1.

According to some optional embodiments of the present disclosure, referring to Fig. 1, the water storage device includes a water storage container 91 for storing the purified water, a low-pressure switch 93 and a water pump 92. The low-pressure switch 93 is connected between the water storage container 91 and the purified-water port 116. The low-pressure switch 93 judges whether the water storage container 91 is full of the purified water by detecting a water pressure in a pipeline. When the water storage container 91 is full of the purified water, the water pressure in the pipeline is large, in which case the low-pressure switch 93 is turned off to prevent the pressure in the water storage container 91 from being too large, so as to avoid problems such as the water leakage and damage, thus improving the reliability of the water purification system 100. When a water level in the water storage container 91 is low, the water pressure in the pipeline is low, in which case the low-pressure switch 93 is turned on. The water pump 92 is connected between the water storage container 91 and the purified-water port 116, and the water pump 92 is used for transporting the purified water in the water storage container 91 to the purified-water port 116. Thus, with the water pump 92 transporting the purified water in the water storage container 91 to the purified-water port 116, the water yield of the purification system is improved, and also, by providing the low-pressure switch 93, the reliability of the water purification system 100 may be improved. Optionally, the water storage container 91 may be a water storage device such as a water bag or a pressure tank.

Furthermore, referring to Fig. 1, the water storage device further includes a second water-input solenoid valve 94. A first end of the second water-input solenoid valve 94 is connected to the purified-water port 116 and a second end of the second water-input solenoid valve 94 is connected to the low-pressure switch 93. Thus, by providing the second water-input solenoid valve 94 in cooperation use with the low-pressure switch 93, the water passage may be easily controlled to be on or off and also the reliability of the water purification system 100 may be improved.

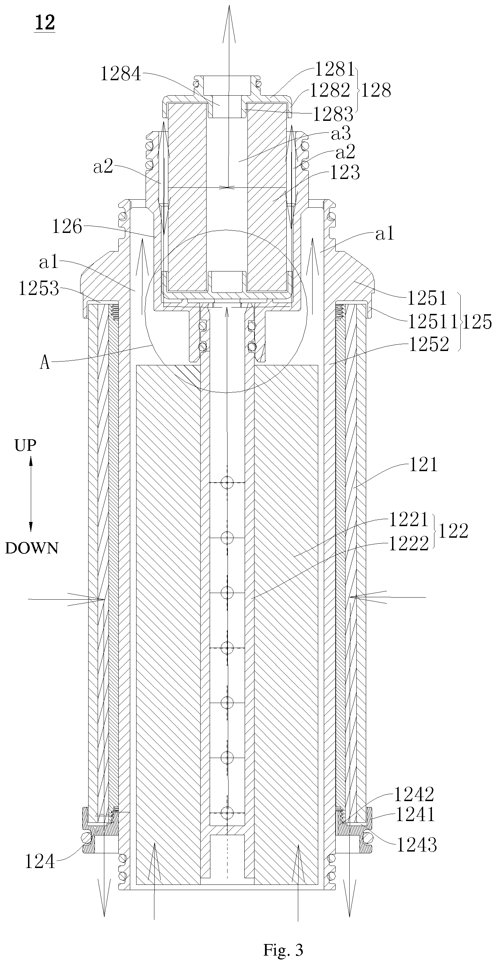

According to some optional embodiments of the present disclosure, referring to Fig. 3, the filtering part and the mouthfeel-improving filter cartridge 123 are arranged along an up-and-down direction. Thus, a three-dimensional arrangement of the composite filter cartridge 12 in the up-and-down direction may be implemented, and a diameter of the composite filter cartridge 12 may be reduced, thereby facilitating a decrease of the overall dimension of the machine. For example, the mouthfeel-improving filter cartridge 123 may be located above the filtering part, so that a structure of the whole composite filter cartridge 12 may be reasonable and steady, thus facilitating a design of flow passages in the composite filter cartridge 12.

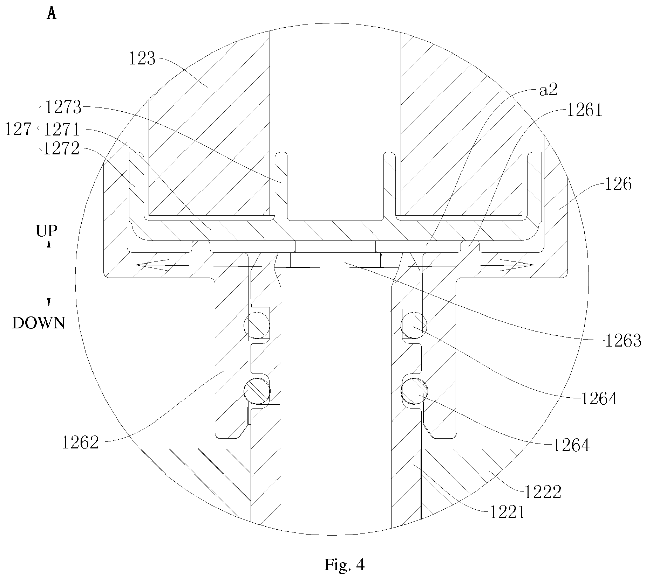

According to some optional embodiments of the present disclosure, referring to Fig. 3 and Fig. 4, the fine filter cartridge 122 includes a central water-collecting pipe 1221 and a fine filter membrane 1222 winding around the central water-collecting pipe 1221. The raw-water inlet 111 is communicated with a water-input end of the pretreating filter cartridge 121 and the central water-collecting pipe 1221 is configured as a water-input end of the fine filter cartridge 122. The fine filter membrane 1222 of the fine filter cartridge 122 may be configured as a reverse osmosis membrane or a nanofiltration membrane. The fine filter cartridge 122 may intercept bacterial viruses, heavy metals and the like. The fine filter cartridge 122 may be formed by a multi-membrane winding technology, thus improving the performance of the fine filter cartridge 122.

The composite filter cartridge 12 further includes a first end cover 124 and a second end cover 125. The first end cover 124 is configured to have an annular shape. The first end cover 124 is disposed at a first end of the filtering part (for example, referring to Fig. 3, the first end cover 124 is disposed at a lower end of the filtering part) and is connected to the pretreating filter cartridge 121. For example, in the embodiment shown in Fig. 3, the first end cover 124 is provided with a first turn-up portion 1241 extending upwards at a circumferential edge thereof and also a second turn-up portion 1242 located at an inner side of the first turn-up portion 1241, and the second turn-up portion 1242 is spaced apart from the first turn-up portion 1241 in a radial direction of the first end cover 124. A first accommodating cavity 1243 is formed between the first turn-up portion 1241 and the second turn-up portion 1242, and the first accommodating cavity 1243 has an annular shape. A lower end of the pretreating filter cartridge 121 is accommodated in the above first accommodating cavity 1243 and is closely fitted with an inner side wall of the first turn-up portion 1241 and an outer side wall of the second turn-up portion 1242.

The second end cover 125 includes an end-cover body 1251 having an annular shape and a partition plate 1252 having a cylindrical shape and extending along an axial direction (an up-and-down direction in Fig. 3) from an end (a lower end of the end-cover body 1251 in Fig. 3) of the end-cover body 1251. The end-cover body 1251 is disposed at a second end of the filtering part (for example, referring to Fig. 3, the end-cover body 1251 is disposed at an upper end of the filtering part) and is connected to the pretreating filter cartridge 121. The partition plate 1252 is located between the pretreating filter cartridge 121 and the fine filter cartridge 122 so as to partition the pretreating filter cartridge 121 from the fine filter cartridge 122. Thus, the pretreating filter cartridge 121 is partitioned from the fine filter cartridge 122 easily, so as to prevent the water after being treated by the pretreating filter cartridge 121 from entering the fine filter cartridge 122 directly to be filtered without being pressurized by the booster pump 4. Further, the lower end of the end-cover body 1251 is provided with a third turn-up portion 12511 extending downwards at an outer circumferential edge thereof. A second accommodating cavity 1253 is formed between the third turn-up portion 12511 and the partition plate 1252 described above, and the second accommodating cavity 1253 has an annular shape. An upper end of the pretreating filter cartridge 121 is accommodated in the second accommodating cavity 1253 and is closely fitted with an inner side wall of the third turn-up portion 12511 and an outer side wall of the partition plate 1252, so that the second end cover 125 may be steadily and reliably connected to the pretreating filter cartridge 121.

The mouthfeel-improving filter cartridge 123 is disposed in the end-cover body 1251, connected to the central water-collecting pipe 1221 and has a purified-water passage a3, in which the purified water flows out of the purified-water passage a3. The purified-water passage a3 is communicated with the purified-water outlet 112. A concentrated-water passage a1 and a circulation passage a2, which are arranged in sequence from outside to inside and spaced apart from each other, are defined between the mouthfeel-improving filter cartridge 123 and the second end cover 125. The circulation passage a2 is configured as the water-input end of the mouthfeel-improving filter cartridge 123, and the circulation passage a2 communicates the purified-water port 116 with the central water-collecting pipe 1221. The concentrated-water outlet 113 is communicated with the concentrated-water passage a1.

Thus, by providing the first end cover 124 and the second end cover 125, it is easy to mount and assemble of the composite filter cartridge 12. Further, disposing the mouthfeel-improving filter cartridge 123 in the second end cover 125 facilitates the design of water passages in the composite filter cartridge 12, allows the structure of the water passages in the composite filter cartridge 12 to be simple, and also ensures the quality of the water flowing out.

A filtration process of the composite filter cartridge 12 will be described briefly with reference to Figs. 1-4.

Referring to Fig. 3 (an arrow direction in the drawing refers to a flow direction of the water) in combination with Figs. 1-2 and Fig. 4, the raw water is primarily filtered by the pretreating filter cartridge 121 firstly, and the water after being primarily filtered by the pretreating filter cartridge 121 flows out of the composite filter cartridge assembly 1 through the pretreated-water outlet 114 in the filter casing 11 and is pressurized by the booster pump 4. The pressurized water flows into the composite filter cartridge assembly 1 through the pretreated-water inlet 115 in the filter casing 11 and is finely filtered by the fine filter cartridge 122. The water after being filtered by the fine filter cartridge 122 is divided into two parts. One part is purified water, and the purified water is collected by the central water-collecting pipe 1221 of the fine filter cartridge 122. The purified water in the central water-collecting pipe 1221 enters the circulation passage a2 described above and flows into the water storage device to be stored through the purified-water port 116 in the filter casing 11. The other part is concentrated water, and the concentrated water flows through the concentrated-water passage a1 and out of the concentrated-water outlet 113 in the filter casing 11, and is further discharged out of the water purification system 100 through the waste-water solenoid valve 7.

When drinking water is needed, the purified water stored in the water storage device may return into the filter casing 11 through the purified-water port 116 and enter the circulation passage a2 described above, and also, the raw water entering through the raw-water inlet 111 may be filtered by the pretreating filter cartridge 121 and the fine filter cartridge 122 of the filtering part in sequence, in which the purified water flows into the above circulation passage a2 through the central water-collecting pipe 1221. The purified water entering the circulation passage a2 flows into the purified-water passage a3 in the mouthfeel-improving filter cartridge 123, after the purified water is filtered by the mouthfeel-improving filter cartridge 123 and the mouthfeel of the purified water is improved. Then, the purified water flows out of the purified-water outlet 112 in the filter casing 11 so as to be drunk.

According to a further embodiment of the present disclosure, referring to Figs. 3 and 4, the water purification system 100 also includes a connecting shell 126. The connecting shell 126 is disposed in the end-cover body 1251 and is connected to the central water-collecting pipe 1221. The concentrated-water passage a1 is defined between the connecting shell 126 and the second end cover 125. The mouthfeel-improving filter cartridge 123 is disposed in the connecting shell 126. The circulation passage a2 is defined between the mouthfeel-improving filter cartridge 123 and an inner wall of the connecting shell 126. Thus, by providing the connecting shell 126, it is easy to assemble the mouthfeel-improving filter cartridge 123, and it is also convenient to separate the mouthfeel-improving filter cartridge 123 from the filtering part.

Optionally, referring to Fig. 4, a protruding block 1261 is provided between the inner wall of the connecting shell 126 and the mouthfeel-improving filter cartridge 123 so as to space the inner wall of the connecting shell 126 apart from the mouthfeel-improving filter cartridge 123, and thus a gap between the inner wall of the connecting shell 126 and the mouthfeel-improving filter cartridge 123 is configured as the circulation passage a2. Thus, by providing the protruding block 1261, the inner wall of the connecting shell 126 is spaced apart from the mouthfeel-improving filter cartridge 123, so as to form the above circulation passage a2 between the mouthfeel-improving filter cartridge 123 and the inner wall of the connecting shell 126, so that the water flowing out of the central water-collecting pipe 1221 of the fine filter cartridge 122 may flow smoothly into the mouthfeel-improving filter cartridge 123 to be filtered. Optionally, the above protruding block 1261 may be provided to the inner wall of the connecting shell 126. One protruding block 1261 may be provided and configured to have an annular shape. The protruding block 1261 may also be configured to have a rod shape and a plurality of protruding blocks 1261 which are spaced apart from one another may be provided.

Optionally, referring to Fig. 3 and Fig. 4, the connecting shell 126 is provided with an annular protrusion 1262, and a water-output end (an upper end of the central water-collecting pipe 1221 in Fig. 3 and Fig. 4) of the central water-collecting pipe 1221 is fitted in the annular protrusion 1262. Thus, with the central water-collecting pipe 1221 being fitted in the annular protrusion 1262 of the connecting shell 126, it is convenient to connect the mouthfeel-improving filter cartridge 123 to the fine filter cartridge 122 quickly and reliably, and the purified water in the central water-collecting pipe 1221 may flow smoothly into the connecting shell 126.

Furthermore, referring to Fig. 4, a sealing member 1264 (for example a sealing ring) may be provided between an inner circumferential wall of the above annular protrusion 1262 and an outer circumferential wall of the central water-collecting pipe 1221, so as to ensure the sealing property of the connection between the connecting shell 126 and the central water-collecting pipe 1221, thus preventing the concentrated water in the concentrated-water passage a1 from entering the connecting shell 126.

Optionally, referring to Fig. 3 and Fig. 4, the water purification system 100 also includes a first positioning member 127 and a second positioning member 128. The first positioning member 127 and the second positioning member 128 are disposed at two axial ends of the mouthfeel-improving filter cartridge 123 respectively and are connected to the mouthfeel-improving filter cartridge 123. Thus, by providing the first positioning member 127 and the second positioning member 128, a position of the mouthfeel-improving filter cartridge 123 may be limited in an axial direction (the up-and-down direction in Fig. 3), so that the mouthfeel-improving filter cartridge 123 may be easily positioned in the connecting shell 126, and thus the structure of the composite filter cartridge 12 may be steady and reliable.

Furthermore, referring to Fig. 3 and Fig. 4, the mouthfeel-improving filter cartridge 123 is configured to be tubular. Both the two axial ends of the mouthfeel-improving filter cartridge 123 may be open, so that the mouthfeel-improving filter cartridge 123 has a simple structure and is easy to process and mold. An inner hole of the mouthfeel-improving filter cartridge 123 is configured as the purified-water passage a3, so that it is not needed to provide the purified-water passage a3 to the mouthfeel-improving filter cartridge 123 additionally. The first positioning member 127 includes a first positioning body 1271 and a first position limiting protrusion 1273 provided to the first positioning body 1271. The first positioning body 1271 covers a first end (a lower end of the mouthfeel-improving filter cartridge 123 in Fig. 3) of the mouthfeel-improving filter cartridge 123 adjacent to the central water-collecting pipe 1221, so that the purified-water passage a3 in the mouthfeel-improving filter cartridge 123 is separated from the central water-collecting pipe 1221, and thus the water in the central water-collecting pipe 1221 is prevented from entering the purified-water passage a3 directly without passing through the mouthfeel-improving filter cartridge 123. The first position limiting protrusion 1273 is fitted in the inner hole of the mouthfeel-improving filter cartridge 123.

The second positioning member 128 includes a second positioning body 1281 and a second position limiting protrusion 1283 provided to the second positioning body 128. The second positioning body 1281 is provided to a second end (an upper end of the mouthfeel-improving filter cartridge 123 in Fig. 3) of the mouthfeel-improving filter cartridge 123 away from the central water-collecting pipe 1221. The second position limiting protrusion 1283 is fitted in the inner hole of the mouthfeel-improving filter cartridge 123, and the second position limiting protrusion 1283 has a water hole 1284 running through the second positioning member 128 along the axial direction, so that the purified water in the purified-water passage a3 may flow out of the water hole 1284 in the second positioning member 128 so as to be drunk.

Thus, by configuring the mouthfeel-improving filter cartridge 123 to be tubular, the purified-water passage a3 in the mouthfeel-improving filter cartridge 123 may be formed easily. Moreover, since the first position limiting protrusion 1273 of the first positioning member 127 and the second position limiting protrusion 1283 of the second positioning member 128 are fitted in the inner hole of the mouthfeel-improving filter cartridge 123 respectively, the mouthfeel-improving filter cartridge 123 may be mounted and positioned easily and quickly, and the structure of the flow passages in the composite filter cartridge 12 may be simple.

The water purification system 100 according to a specific embodiment of the present disclosure will be described with reference to Figs. 1-4.

Referring to Figs. 1-4, in the present embodiment, the water purification system 100 includes the composite filter cartridge assembly 1, the booster pump 4, the waste-water solenoid valve 7 and the water storage device. Further, the water purification system 100 also includes a water-input pipeline b1, a purified-water pipeline b2, a concentrated-water pipeline b3, a pretreating pipeline b4, a water-storage pipeline b5, the first water-input solenoid valve 3, a check valve 5, a high-pressure switch 6, and a faucet 8. The water storage device includes the water storage container 91, the low-pressure switch 93, the water pump 92 and the second water-input solenoid valve 94 described above.

The composite filter cartridge assembly 1 includes the filter casing 11 and the composite filter cartridge 12 described above. The composite filter cartridge 12 includes the filtering part, the first end cover 124, the second end cover 125, the mouthfeel-improving filter cartridge 123, the connecting shell 126, the first positioning member 127 and the second positioning member 128 described above. Furthermore, the filtering part includes the pretreating filter cartridge 121 and the fine filter cartridge 122 described above. The first end cover 124 is provided to a bottom portion of the filtering part and is connected to both the pretreating filter cartridge 121 and the fine filter cartridge 122. The second end cover 125 is provided to a top portion of the filtering part and is connected to the pretreating filter cartridge 121. The connecting shell 126 is disposed in the second end cover 125. An upper end of the connecting shell 126 is open and a lower end of the connecting shell 126 has a through hole 1263 communicating with an inner cavity of the connecting shell 126. The annular protrusion 1262 is provided to a circumferential edge of the through hole 1263 and extends downwards, and the upper end of the central water-collecting pipe 1221 is fitted in the annular protrusion 1262.

The mouthfeel-improving filter cartridge 123 is disposed in the connecting shell 126, and the first positioning member 127 and the second positioning member 128 are respectively provided to the lower end and the upper end of the mouthfeel-improving filter cartridge 123. A bottom wall of the connecting shell 126 is provided with the protruding block 1261 described above, the first positioning member 127 is placed in the connecting shell 126 and the first positioning body 1271 of the first positioning member 127 is supported on the above protruding block 1261, so that the first positioning body 1271 is spaced apart from the bottom wall of the connecting shell 126, and thus the purified water in the central water-collecting pipe 1221 may smoothly flow into the circulation passage a2 in the connecting shell 126.

The first positioning body 1271 is configured to be round, and the first positioning body 1271 is provided with a fifth turn-up portion 1272 extending upwards at a circumferential edge thereof. The lower end of the mouthfeel-improving filter cartridge 123 abuts against an inner circumferential wall of the fifth turn-up portion 1272, thereby further improving stability of the fit between the first positioning member 127 and the mouthfeel-improving filter cartridge 123. The fifth turn-up portion 1272 is spaced apart from an inner circumferential wall of the connecting shell 126, in which case a gap between the first positioning member 127 and the inner wall of the connecting shell 126, and a gap between an outer circumferential wall of the mouthfeel-improving filter cartridge 123 and the inner wall of the connecting shell 126 together constitute the circulation passage a2 described above. The second positioning body 1281 is configured to be round, and the second positioning body 1281 is provided with a sixth turn-up portion 1282 extending downwards at a circumferential edge thereof. The upper end of the mouthfeel-improving filter cartridge 123 abuts against an inner circumferential wall of the sixth turn-up portion 1282, thereby further improving stability of the fit between the second positioning member 128 and the mouthfeel-improving filter cartridge 123.

The water-input pipeline b1 is connected to the raw-water inlet 111 in the filter casing 11. A first end of the pretreating pipeline b4 is connected to the pretreated-water outlet and a second end of the pretreating pipeline b4 is connected to the pretreated-water inlet. The booster pump 4 and the first water-input solenoid valve 3 are connected in series in the pretreating pipeline b4 along the flow direction of the water. Both two ends of the water-storage pipeline b5 are connected to the purified-water port 116. The second water-input solenoid valve 94, the low-pressure switch 93, the water storage container 91 and the water pump 92 are connected in series in the water-storage pipeline b5 sequentially. The purified-water pipeline b2 is connected to the purified-water outlet 112 in the filter casing 11. The check valve 5, the high-pressure switch 6 and the faucet 8 are sequentially connected in series in the purified-water pipeline b2 along the flow direction of the water. The check valve 5 is configured to allow the purified water to unidirectionally flow therethrough in a direction from the purified-water outlet 112 to the faucet 8. The check valve 5 is used for preventing the water in the purified-water pipeline b2 from returning into the composite filter cartridge 12. The high-pressure switch 6 may detect whether the faucet 8 is at an on state or an off state according to a water pressure in the purified-water pipeline b2.

Thus, when the faucet 8 is on, the water purification system 100 starts working. Both the first water-input solenoid valve 3 and the second water-input solenoid valve 94 are opened, both the high-pressure switch 6 and the low-pressure switch 93 are turned on, and the raw water enters the water-input pipeline b1 and flows into the composite filter cartridge assembly 1 through the raw-water inlet 111 in the filter casing 11. The raw water flowing into the composite filter cartridge assembly 1 is primarily filtered by the pretreating filter cartridge 121 firstly, and the water after being primarily filtered by the pretreating filter cartridge 121 flows out of the composite filter cartridge assembly 1 through the pretreated-water outlet 114 in the filter casing 11 and flows into the pretreating pipeline b4. After being pressurized by the booster pump 4, the water flowing into the pretreating pipeline b4 flows into the composite filter cartridge assembly 1 through the pretreated-water inlet 115 in the filter casing 11 and is finely filtered by the fine filter cartridge 122.

The purified water obtained by filtration of the fine filter cartridge 122 is collected by the central water-collecting pipe 1221 of the fine filter cartridge 122. The purified water in the central water-collecting pipe 1221 flows through the circulation passage a2 and out of the purified-water port 116 in the filter casing 11, and flows into the water-storage pipeline b5. The purified water flowing into the water-storage pipeline b5 flows through the second water-input solenoid valve 94 and the low-pressure switch 93 sequentially and then flows into the water storage container 91 to be stored. Moreover, the generated concentrated water flows into the concentrated-water pipeline b3 through the concentrated-water passage a1 and the concentrated-water outlet 113 in the filter casing 11, and is finally discharged out of the water purification system 100 after passing through the waste-water solenoid valve 7.

When drinking water is needed, the water pump 92 is started, the purified water stored in the water storage container 91 is pressurized by the water pump 92 and then flows into the circulation passage a2 through the purified-water port 116 in the filter casing 11. Then, the purified water is filtered by the mouthfeel-improving filter cartridge 123 and the mouthfeel of the purified water is improved. Finally, the purified water flows into the purified-water pipeline b2 through the purified-water outlet 112 in the filter casing 11, and further flows out of the faucet 8 to be drunk.

Reference throughout this specification to "an embodiment," "some embodiments," "one embodiment", "another example," "an example," "a specific example," or "some examples," means that a particular feature, structure, material, or characteristic described in connection with the embodiment or example is included in at least one embodiment or example of the present disclosure. Thus, the appearances of the phrases such as "in some embodiments," "in one embodiment", "in an embodiment", "in another example," "in an example," "in a specific example," or "in some examples," in various places throughout this specification are not necessarily referring to the same embodiment or example of the present disclosure. Furthermore, the particular features, structures, materials, or characteristics may be combined in any suitable manner in one or more embodiments or examples.

Although explanatory embodiments have been shown and described, it would be appreciated by those skilled in the art that the above embodiments cannot be construed to limit the present disclosure, and changes, alternates, and modifications can be made in the embodiments without departing from the principles and scope of the present disclosure. The scope of the invention is defined in the appended claims.

## Claims

1. A water purification system (100), comprising:
a composite filter cartridge assembly (1) comprising a filter casing (11) and a composite filter cartridge (12) disposed in the filter casing (11), wherein the filter casing (11) has a raw-water inlet (111), a pretreated-water outlet (114), a pretreated-water inlet (115), a purified-water port (116), a purified-water outlet (112) and a concentrated-water outlet, the composite filter cartridge (12) comprises a filtering part and a mouthfeel-improving filter cartridge (123), the filtering part comprises a pretreating filter cartridge (121) and a fine filter cartridge (122) which are disposed in sequence from outside to inside and spaced apart from each other, the filtering part and the mouthfeel-improving filter cartridge (123) are arranged along an up-and-down direction, the purified-water outlet (112) is communicated with a water-output end of the mouthfeel-improving filter cartridge (123), the mouthfeel-improving filter cartridge (123) is connected to the fine filter cartridge (122) and is located at the downstream of the fine filter cartridge (122), the pretreated-water outlet (114) is communicated with a water-output end of the pretreating filter cartridge (121), the pretreated-water inlet (115) is communicated with a water-input end of the fine filter cartridge (122), the purified-water port (116) is communicated with a water-output end of the fine filter cartridge (122) and communicated with the water-input end of the mouthfeel-improving filter cartridge (123);
a booster pump (4) having a first end connected to the pretreated-water outlet (114) and a second end connected to the pretreated-water inlet (115), wherein the booster pump (4) is configured for transporting water flowing out of the pretreated-water outlet (114) to the pretreated-water inlet (115);
a waste-water solenoid valve (7) connected to the concentrated-water outlet (113); and
a water storage device (91, 92, 93) connected to the purified-water port (116) and configured for storing purified water flowing out of the purified-water port (116), the water storage device (91, 92, 93) being connected to the purified-water port (116) and configured such that water can flow into water storage device (91, 92, 93) from the purified-water port (116) and such that water can flow from the water storage device (91, 92, 93) to the purified-water port (116).

2. The water purification system (100) according to claim 1, further comprising a first water-input solenoid valve connected between the booster pump and the pretreated-water inlet.

3. The water purification system (100) according to claim 1 or 2, wherein the raw-water inlet and the pretreated-water inlet (115) are located at an upper end of the filter casing, the pretreated-water outlet, the purified-water port (116), the purified-water outlet (112) and the concentrated-water outlet are located at a lower end of the filter casing.

4. The water purification system (100) according to any one of claims 1-3, wherein the water storage device (91, 92, 93) comprises:
a water storage container (91) configured for storing the purified water;
a low-pressure switch (93) connected between the water storage container and the purified-water port (116); and
a water pump (92) connected between the water storage container and the purified-water port (116), and configured for transporting the purified water in the water storage container to the purified-water port (116).

5. The water purification system (100) according to claim 4, wherein the water storage device (91, 92, 93) further comprises a second water-input solenoid valve (94), and the second water-input solenoid valve (94) has a first end connected to the purified-water port (116) and a second end connected to the low-pressure switch.

6. The water purification system (100) according to any one of claims 1-5, wherein the fine filter cartridge (122) comprises a central water-collecting pipe (1221) and a fine filter membrane (1222) winding around the central water-collecting pipe (1221), the raw-water inlet (111) is communicated with a water-input end of the pretreating filter cartridge (121) and the central water-collecting pipe (1221) is configured as a water-output end of the fine filter cartridge (122), wherein the composite filter cartridge (12) further comprises:
a first end cover configured to have an annular shape, disposed at a first end of the filtering part and connected to the pretreating filter cartridge (121); and
a second end cover comprising an end-cover body configured to have an annular shape and a partition plate configured to have a cylindrical shape and extending along an axial direction from an end of the end-cover body, wherein the end-cover body is disposed at a second end of the filtering part and is connected to the pretreating filter cartridge (121), the partition plate is located between the pretreating filter cartridge (121) and the fine filter cartridge (122) so as to partition the pretreating filter cartridge (121) from the fine filter cartridge (122),
wherein the mouthfeel-improving filter cartridge (123) is disposed in the end-cover body, the mouthfeel-improving filter cartridge (123) is connected to the central water-collecting pipe (1221) and has a purified-water passage (a3) which is configured to be flowed out of by the purified water, the purified-water passage (a3) is communicated with the purified-water outlet (116), a concentrated-water passage (a1) and a circulation passage (a2), which are arranged in sequence from outside to inside and spaced apart from each other, are defined between the mouthfeel-improving filter cartridge (123) and the second end cover, the circulation passage (a2) is configured as the water-input end of the mouthfeel-improving filter cartridge (123) and the circulation passage (a2) communicates the purified-water port (116) with the central water-collecting pipe (1221), the concentrated-water outlet is communicated with the concentrated-water passage (a1).

7. The water purification system (100) according to claim 6, further comprising a connecting shell disposed in the end-cover body and connected to the central water-collecting pipe (1221), wherein the concentrated-water passage (a1) is defined between the connecting shell (126) and the second end cover, the mouthfeel-improving filter cartridge (123) is disposed in the connecting shell, and the circulation passage is defined between the mouthfeel-improving filter cartridge (123) and an inner wall of the connecting shell (126).

8. The water purification system (100) according to claim 7, wherein a protruding block is provided between the inner wall of the connecting shell and the mouthfeel-improving filter cartridge (123) so as to space the inner wall of the connecting shell (126) apart from the mouthfeel-improving filter cartridge (123), and a gap between the inner wall of the connecting shell and the mouthfeel-improving filter cartridge (123) is configured as the circulation passage (a2).

9. The water purification system (100) according to claim 7 or 8, wherein the connecting shell (126) is provided with an annular protrusion, and a water-output end of the central water-collecting pipe is fitted in the annular protrusion (1262).

10. The water purification system (100) according to any one of claims 7-9, further comprising a first positioning member (127) and a second positioning member (128), wherein the first positioning member and the second positioning member are disposed at two axial ends of the mouthfeel-improving filter cartridge (123) respectively and are connected to the mouthfeel-improving filter cartridge (123).

11. The water purification system (100) according to claim 10, wherein the mouthfeel-improving filter cartridge (123) is configured to be tubular and has an inner hole configured as the purified-water passage (a3), the first positioning member (127) comprises a first positioning body and a first position limiting protrusion (1273) provided to the first positioning body (1271), the first positioning body (1271) covers a first end of the mouthfeel-improving filter cartridge (123) adjacent to the central water-collecting pipe, the first position limiting protrusion (1273) is fitted in the inner hole of the mouthfeel-improving filter cartridge (123), the second positioning member (128) comprises a second positioning body (1281) and a second position limiting protrusion (1283) provided to the second positioning body (1281), the second positioning body (1281) is provided to a second end of the mouthfeel-improving filter cartridge (123) away from the central water-collecting pipe, the second position limiting protrusion (1283) is fitted in the inner hole of the mouthfeel-improving filter cartridge (123) and the second position limiting protrusion (1283) has a water hole running through the second positioning member along an axial direction.

## Patentansprüche

1. Wasserreinigungssystem (100), das Folgendes umfasst:
eine Stufenfilterpatronenanordnung (1), umfassend ein Filtergehäuse (11) und eine in dem Filtergehäuse (11) angeordnete Stufenfilterpatrone (12), wobei das Filtergehäuse (11) einen Rohwassereinlass (111), einen Auslass (114) für vorbehandeltes Wasser, einen Einlass (115) für vorbehandeltes Wasser, einen Anschluss (116) für gereinigtes Wasser, einen Auslass (112) für gereinigtes Wasser und einen Auslass für konzentriertes Wasser umfasst, die Stufenfilterpatrone (12) einen Filtrierungsteil und
eine Mundgefühlverbesserungs-Filterpatrone (123) umfasst, der Filtrierungsteil eine Vorbehandlungsfilterpatrone (121) und eine Feinfilterpatrone (122) umfasst, die nacheinander von außen nach innen angeordnet sind und voneinander beabstandet sind, der Filtrierungsteil und die Mundgefühlverbesserungs-Filterpatrone (123) entlang einer Oben-Unten-Richtung angeordnet sind, der Auslass (112) für gereinigtes Wasser mit einem Wasseraustrittsende der Mundgefühlverbesserungs-Filterpatrone (123) in Verbindung steht, die Mundgefühlverbesserungs-Filterpatrone (123) mit der Feinfilterpatrone (122) verbunden ist und sich stromabwärts der Feinfilterpatrone (122) befindet, der Auslass (114) für vorbehandeltes Wasser mit einem Wasseraustrittsende der Vorbehandlungsfilterpatrone (121) in Verbindung steht, der Einlass (115) für vorbehandeltes Wasser mit einem Wassereintrittsende der Feinfilterpatrone (122) in Verbindung steht und der Anschluss (116) für gereinigtes Wasser mit einem Wasseraustrittsende der Feinfilterpatrone (122) in Verbindung steht und mit dem Wassereintrittsende der Mundgefühlverbesserungs-Filterpatrone (123) in Verbindung steht;
eine Druckerhöhungspumpe (4) mit einem ersten Ende, das mit dem Auslass (114) für vorbehandeltes Wasser verbunden ist, und einem zweiten Ende, das mit dem Einlass (115) für vorbehandeltes Wasser verbunden ist, wobei die Druckerhöhungspumpe (4) zum Transportieren von aus dem Auslass (114) für vorbehandeltes Wasser fließendem Wasser zu dem Einlass (115) für vorbehandeltes Wasser konfiguriert ist;
ein Abwassermagnetventil (7), das mit dem Auslass (113) für konzentriertes Wasser verbunden ist; und
eine Wasserspeichervorrichtung (91, 92, 93), die mit dem Anschluss (116) für gereinigtes Wasser verbunden ist und zum Speichern von aus dem Anschluss (116) für gereinigtes Wasser fließendem gereinigtem Wasser konfiguriert ist, wobei die Wasserspeichervorrichtung (91, 92, 93) mit dem Anschluss (116) für gereinigtes Wasser verbunden ist und derart konfiguriert ist, dass Wasser von dem Anschluss (116) für gereinigtes Wasser in die Wasserspeichervorrichtung (91, 92, 93) fließen kann, und dass Wasser von der Wasserspeichervorrichtung (91, 92, 93) zu dem Anschluss (116) für gereinigtes Wasser fließen kann.

2. Wasserreinigungssystem (100) nach Anspruch 1, ferner umfassend ein erstes Wassereintritts-Magnetventil, das zwischen der Druckerhöhungspumpe und dem Einlass für vorbehandeltes Wasser angeschlossen ist.

3. Wasserreinigungssystem (100) nach Anspruch 1 oder 2, wobei sich der Rohwassereinlass und der Einlass (115) für vorbehandeltes Wasser an einem oberen Ende des Filtergehäuses befinden und sich der Auslass für vorbehandeltes Wasser, der Anschluss (116) für gereinigtes Wasser, der Auslass (112) für gereinigtes Wasser und der Auslass für konzentriertes Wasser an einem unteren Ende des Filtergehäuses befinden.

4. Wasserreinigungssystem (100) nach einem der Ansprüche 1-3, wobei die Wasserspeichervorrichtung (91, 92, 93) Folgendes umfasst:
einen Wasserspeicherbehälter (91), der zum Speichern des gereinigten Wassers konfiguriert ist;
einen Niederdruckschalter (93), der zwischen dem Wasserspeicherbehälter und dem Anschluss (116) für gereinigtes Wasser angeschlossen ist; und
eine Wasserpumpe (92), die zwischen dem Wasserspeicherbehälter und dem Anschluss (116) für gereinigtes Wasser angeschlossen ist und zum Transportieren des gereinigten Wassers in dem Wasserspeicherbehälter zu dem Anschluss (116) für gereinigtes Wasser konfiguriert ist.

5. Wasserreinigungssystem (100) nach Anspruch 4, wobei die Wasserspeichervorrichtung (91, 92, 93) ferner ein zweites Wassereintritts-Magnetventil (94) umfasst und das zweite Wassereintritts-Magnetventil (94) ein mit dem Anschluss (116) für gereinigtes Wasser verbundenes erstes Ende und ein mit dem Niederdruckschalter verbundenes zweites Ende aufweist.

6. Wasserreinigungssystem (100) nach einem der Ansprüche 1-5, wobei die Feinfilterpatrone (122) ein zentrales Wassersammelrohr (1221) und eine sich um das zentrale Wassersammelrohr (1221) windende Feinfiltermembran (1222) umfasst, wobei der Rohwassereinlass (111) mit einem Wassereintrittsende der Vorbehandlungsfilterpatrone (121) in Verbindung steht und das zentrale Wassersammelrohr (1221) als Wasseraustrittsende der Feinfilterpatrone (122) konfiguriert ist,
wobei die Stufenfilterpatrone (12) ferner Folgendes umfasst:
eine erste Endabdeckung, die dazu konfiguriert ist, eine Ringform aufzuweisen, an einem ersten Ende des Filtrierungsteils angeordnet ist und mit der Vorbehandlungsfilterpatrone (121) verbunden ist; und
eine zweite Endabdeckung, umfassend einen Endabdeckungskörper, der dazu konfiguriert ist, eine Ringform aufzuweisen, und eine Trennplatte, die dazu konfiguriert ist, eine zylindrische Form aufzuweisen und sich entlang einer Axialrichtung von einem Ende des Endabdeckungskörpers erstreckt, wobei der Endabdeckungskörper an einem zweiten Ende des Filtrierungsteils angeordnet ist und mit der Vorbehandlungsfilterpatrone (121) verbunden ist, wobei sich die Trennplatte zwischen der Vorbehandlungsfilterpatrone (121) und der Feinfilterpatrone (122) befindet, um die Vorbehandlungsfilterpatrone (121) von der Feinfilterpatrone (122) zu trennen,
wobei die Mundgefühlverbesserungs-Filterpatrone (123) in dem Endabdeckungskörper angeordnet ist, die Mundgefühlverbesserungs-Filterpatrone (123) mit dem zentralen Wassersammelrohr (1221) verbunden ist und einen Kanal (a3) für gereinigtes Wasser aufweist, der dazu konfiguriert ist, dass das gereinigte Wasser daraus heraus fließt, der Kanal (a3) für gereinigtes Wasser mit dem Auslass (116) für gereinigtes Wasser in Verbindung steht, ein Kanal (a1) für konzentriertes Wasser und ein Umlaufkanal (a2), die nacheinander von außen nach innen angeordnet sind und voneinander beabstandet sind, zwischen der Mundgefühlverbesserungs-Filterpatrone (123) und der zweiten Endabdeckung definiert sind, der Umlaufkanal (a2) als das Wassereintrittsende der Mundgefühlverbesserungs-Filterpatrone (123) konfiguriert ist und der Umlaufkanal (a2) den Anschluss (116) für gereinigtes Wasser mit dem zentralen Wassersammelrohr (1221) in Verbindung setzt, der Auslass für konzentriertes Wasser mit dem Kanal (a1) für konzentriertes Wasser in Verbindung steht.

7. Wasserreinigungssystem (100) nach Anspruch 6, ferner umfassend eine Verbindungsschale, die in dem Endabdeckungskörper angeordnet ist und mit dem zentralen Wassersammelrohr (1221) verbunden ist, wobei der Kanal (a1) für konzentriertes Wasser zwischen der Verbindungsschale (126) und der zweiten Endabdeckung definiert ist, die Mundgefühlverbesserungs-Filterpatrone (123) in der Verbindungsschale angeordnet ist und der Umlaufkanal zwischen der Mundgefühlverbesserungs-Filterpatrone (123) und einer Innenwand der Verbindungsschale (126) definiert ist.

8. Wasserreinigungssystem (100) nach Anspruch 7, wobei ein vorstehender Klotz zwischen der Innenwand der Verbindungsschale und der Mundgefühlverbesserungs-Filterpatrone (123) bereitgestellt ist, um die Innenwand der Verbindungsschale (126) in einem Abstand von der Mundgefühlverbesserungs-Filterpatrone (123) zu halten, und ein Spalt zwischen der Innenwand der Verbindungsschale und der Mundgefühlverbesserungs-Filterpatrone (123) als der Umlaufkanal (a2) konfiguriert ist.

9. Wasserreinigungssystem (100) nach Anspruch 7 oder 8, wobei die Verbindungsschale (126) mit einem ringförmigen Vorsprung versehen ist und ein Wasseraustrittsende des zentralen Wassersammelrohr in den ringförmigen Vorsprung (1262) eingesetzt ist.

10. Wasserreinigungssystem (100) nach einem der Ansprüche 7-9, ferner umfassend ein erstes Positionierungselement (127) und ein zweites Positionierungselement (128), wobei das erste Positionierungselement und das zweite Positionierungselement jeweils an einem von zwei axialen Enden der Mundgefühlverbesserungs-Filterpatrone (123) angeordnet sind und mit der Mundgefühlverbesserungs-Filterpatrone (123) verbunden sind.

11. Wasserreinigungssystem (100) nach Anspruch 10, wobei die Mundgefühlverbesserungs-Filterpatrone (123) dazu konfiguriert ist, röhrenförmig zu sein und ein inneres Loch aufweist, das als der Kanal (a3) für gereinigtes Wasser konfiguriert ist, das erste Positionierungselement (127) einen ersten Positionierungskörper und einen an dem ersten Positionierungskörper (1271) bereitgestellten ersten Lagebegrenzungsvorsprung (1273) umfasst, der erste Positionierungskörper (1271) ein dem zentralen Wassersammelrohr benachbartes erstes Ende der Mundgefühlverbesserungs-Filterpatrone (123) abdeckt, der erste Lagebegrenzungsvorsprung (1273) in das innere Loch der Mundgefühlverbesserungs-Filterpatrone (123) eingesetzt ist, das zweite Positionierungselement (128) einen zweiten Positionierungskörper (1281) und einen an dem zweiten Positionierungskörper (1281) bereitgestellten zweiten Lagebegrenzungsvorsprung (1283) umfasst, der zweite Positionierungskörper (1281) an einem von dem zentralen Wassersammelrohr abgelegenen zweiten Ende der Mundgefühlverbesserungs-Filterpatrone (123) bereitgestellt ist, der zweite Lagebegrenzungsvorsprung (1283) in das innere Loch der Mundgefühlverbesserungs-Filterpatrone (123) eingesetzt ist und der zweite Lagebegrenzungsvorsprung (1283) ein durch das zweite Positionierungselement entlang einer Axialrichtung laufendes Wasserloch aufweist.

## Revendications

1. Système de purification d'eau (100), comportant :
un ensemble formant cartouche filtrante composite (1) comportant un caisson de filtre (11) et une cartouche filtrante composite (12) disposée dans le caisson de filtre (11), dans lequel le caisson de filtre (11) a une entrée d'eau brute (111), une sortie d'eau prétraitée (114), une entrée d'eau prétraitée (115), un orifice d'eau purifiée (116), une sortie d'eau purifiée (112) et une sortie d'eau concentrée, la cartouche filtrante composite (12) comporte une partie filtrante et une cartouche filtrante d'amélioration de sensation en bouche (123), la partie filtrante comporte une cartouche filtrante de prétraitement (121) et une cartouche filtrante fine (122) qui sont disposées de manière séquentielle depuis l'extérieur vers l'intérieur et espacées l'une par rapport à l'autre, la partie filtrante et la cartouche filtrante d'amélioration de sensation en bouche (123) sont agencées le long d'une direction allant de haut en bas, la sortie d'eau purifiée (112) est en communication avec une extrémité de sortie d'eau de la cartouche filtrante d'amélioration de sensation en bouche (123), la cartouche filtrante d'amélioration de sensation en bouche (123) est raccordée à la cartouche filtrante fine (122) et est située en aval par rapport à la cartouche filtrante fine (122), la sortie d'eau prétraitée (114) est en communication avec une extrémité de sortie d'eau de la cartouche filtrante de prétraitement (121), l'entrée d'eau prétraitée (115) est en communication avec une extrémité d'entrée d'eau de la cartouche filtrante fine (122), l'orifice d'eau purifiée (116) est en communication avec une extrémité de sortie d'eau de la cartouche filtrante fine (122) et en communication avec l'extrémité d'entrée d'eau de la cartouche filtrante d'amélioration de sensation en bouche (123) ;
une pompe de surpression (4) ayant une première extrémité raccordée à la sortie d'eau prétraitée (114) et une deuxième extrémité raccordée à l'entrée d'eau prétraitée (115), dans lequel la pompe de surpression (4) est configurée pour transporter l'eau s'écoulant hors de la sortie d'eau prétraitée (114) jusqu'à l'entrée d'eau prétraitée (115) ;
une électrovanne d'eau usée (7) raccordée à la sortie d'eau concentrée (113) ; et
un dispositif de stockage d'eau (91, 92, 93) raccordé à l'orifice d'eau purifiée (116) et configuré pour stocker l'eau purifiée s'écoulant hors de l'orifice d'eau purifiée (116), le dispositif de stockage d'eau (91, 92, 93) étant raccordé à l'orifice d'eau purifiée (116) et configuré de telle sorte que l'eau peut s'écouler jusque dans le dispositif de stockage d'eau (91, 92, 93) en provenance de l'orifice d'eau purifiée (116) et de telle sorte que l'eau peut s'écouler en provenance du dispositif de stockage d'eau (91, 92, 93) jusqu'à l'orifice d'eau purifiée (116).

2. Système de purification d'eau (100) selon la revendication 1, comportant par ailleurs une première électrovanne d'entrée d'eau raccordée entre la pompe de surpression et l'entrée d'eau prétraitée.

3. Système de purification d'eau (100) selon la revendication 1 ou la revendication 2, dans lequel l'entrée d'eau brute et l'entrée d'eau prétraitée (115) sont situées au niveau d'une extrémité supérieure du caisson de filtre, la sortie d'eau prétraitée, l'orifice d'eau purifiée (116), la sortie d'eau purifiée (112) et la sortie d'eau concentrée sont situés au niveau d'une extrémité inférieure du caisson de filtre.

4. Système de purification d'eau (100) selon l'une quelconque des revendications 1 à 3, dans lequel le dispositif de stockage d'eau (91, 92, 93) comporte :
un contenant de stockage d'eau (91) configuré pour stocker l'eau purifiée ;
un commutateur basse pression (93) raccordé au contenant de stockage d'eau et à l'orifice d'eau purifiée (116) ; et
une pompe à eau (92) raccordée entre le contenant de stockage d'eau et l'orifice d'eau purifiée (116), et configurée pour transporter l'eau purifiée dans le contenant de stockage d'eau jusqu'à l'orifice d'eau purifiée (116).

5. Système de purification d'eau (100) selon la revendication 4, dans lequel le dispositif de stockage d'eau (91, 92, 93) comporte par ailleurs une deuxième électrovanne d'entrée d'eau (94), et la deuxième électrovanne d'entrée d'eau (94) a une première extrémité raccordée à l'orifice d'eau purifiée (116) et une deuxième extrémité raccordée au commutateur basse pression.

6. Système de purification d'eau (100) selon l'une quelconque des revendications 1 à 5, dans lequel la cartouche filtrante fine (122) comporte un tuyau central de collecte d'eau (1221) et une membrane filtrante fine (1222) s'enroulant autour du tuyau central de collecte d'eau (1221), l'entrée d'eau brute (111) est en communication avec une extrémité d'entrée d'eau de la cartouche filtrante de prétraitement (121) et le tuyau central de collecte d'eau (1221) est configuré comme étant une extrémité de sortie d'eau de la cartouche filtrante fine (122),
dans lequel la cartouche filtrante composite (12) comporte par ailleurs :
un premier couvercle d'extrémité configuré pour avoir une forme annulaire, disposé au niveau d'une première extrémité de la partie filtrante et raccordé à la cartouche filtrante de prétraitement (121) ; et
un deuxième couvercle d'extrémité comportant un corps de couvercle d'extrémité configuré pour avoir une forme annulaire et une plaque de séparation configurée pour avoir une forme cylindrique et s'étendant le long d'une direction axiale depuis une extrémité du corps de couvercle d'extrémité, dans lequel le corps de couvercle d'extrémité est disposé au niveau d'une deuxième extrémité de la partie filtrante et est raccordé à la cartouche filtrante de prétraitement (121), la plaque de séparation est située entre la cartouche filtrante de prétraitement (121) et la cartouche filtrante fine (122) de manière à séparer la cartouche filtrante de prétraitement (121) de la cartouche filtrante fine (122),
dans lequel la cartouche filtrante d'amélioration de sensation en bouche (123) est disposée dans le corps de couvercle d'extrémité, la cartouche filtrante d'amélioration de sensation en bouche (123) est raccordée au tuyau central de collecte d'eau (1221) et a un passage d'eau purifiée (a3) qui est configuré pour être vidangé par l'eau purifiée, le passage d'eau purifiée (a3) est en communication avec la sortie d'eau purifiée (116), un passage d'eau concentrée (a1) et un passage de circulation (a2), qui sont agencés de manière séquentielle depuis l'extérieur vers l'intérieur et espacés l'un par rapport à l'autre, sont définis entre la cartouche filtrante d'amélioration de sensation en bouche (123) et le deuxième couvercle d'extrémité, le passage de circulation (a2) est configuré comme étant l'extrémité d'entrée d'eau de la cartouche filtrante d'amélioration de sensation en bouche (123) et le passage de circulation (a2) fait communiquer l'orifice d'eau purifiée (116) avec le tuyau central de collecte d'eau (1221), la sortie d'eau concentrée est en communication avec le passage d'eau concentrée (a1).

7. Système de purification d'eau (100) selon la revendication 6, comportant par ailleurs une coque de raccordement disposée dans le corps de couvercle d'extrémité et raccordée au tuyau central de collecte d'eau (1221), dans lequel le passage d'eau concentrée (a1) est défini entre la coque de raccordement (126) et le deuxième couvercle d'extrémité, la cartouche filtrante d'amélioration de sensation en bouche (123) est disposée dans la coque de raccordement, et le passage de circulation est défini entre la cartouche filtrante d'amélioration de sensation en bouche (123) et une paroi intérieure de la coque de raccordement (126).

8. Système de purification d'eau (100) selon la revendication 7, dans lequel un bloc faisant saillie est mis en œuvre entre la paroi intérieure de la coque de raccordement et la cartouche filtrante d'amélioration de sensation en bouche (123) de manière à espacer la paroi intérieure de la coque de raccordement (126) à distance de la cartouche filtrante d'amélioration de sensation en bouche (123), et un espace entre la paroi intérieure de la coque de raccordement et la cartouche filtrante d'amélioration de sensation en bouche (123) est configuré comme étant le passage de circulation (a2).

9. Système de purification d'eau (100) selon la revendication 7 ou la revendication 8, dans lequel la coque de raccordement (126) comporte une partie saillante annulaire, et une extrémité de sortie d'eau du tuyau central de collecte d'eau est adaptée dans la partie saillante annulaire (1262).

10. Système de purification d'eau (100) selon l'une quelconque des revendications 7 à 9, comportant par ailleurs un premier élément de positionnement (127) et un deuxième élément de positionnement (128), dans lequel le premier élément de positionnement et le deuxième élément de positionnement sont disposés au niveau de deux extrémités axiales de la cartouche filtrante d'amélioration de sensation en bouche (123) respectivement et sont raccordés à la cartouche filtrante d'amélioration de sensation en bouche (123).

11. Système de purification d'eau (100) selon la revendication 10, dans lequel la cartouche filtrante d'amélioration de sensation en bouche (123) est configurée pour être tubulaire et a un trou intérieur configuré comme étant le passage d'eau purifiée (a3), le premier élément de positionnement (127) comporte un premier corps de positionnement et une première partie saillante de limitation de position (1273) mise en œuvre au niveau du premier corps de positionnement (1271), le premier corps de positionnement (1271) recouvre une première extrémité de la cartouche filtrante d'amélioration de sensation en bouche (123) de manière adjacente par rapport au tuyau central de collecte d'eau, la première partie saillante de limitation de position (1273) est adaptée dans le trou intérieur de la cartouche filtrante d'amélioration de sensation en bouche (123), le deuxième élément de positionnement (128) comporte un deuxième corps de positionnement (1281) et une deuxième partie saillante de limitation de position (1283) mise en œuvre au niveau du deuxième corps de positionnement (1281), le deuxième corps de positionnement (1281) est mis en œuvre au niveau d'une deuxième extrémité de la cartouche filtrante d'amélioration de sensation en bouche (123) à l'opposé du tuyau central de collecte d'eau, la deuxième partie saillante de limitation de position (1283) est adaptée dans le trou intérieur de la cartouche filtrante d'amélioration de sensation en bouche (123) et la deuxième partie saillante de limitation de position (1283) a un trou d'eau s'étendant au travers du deuxième élément de positionnement le long d'une direction axiale.
